(19) Europäisches Patentamt
European Patent Office
Office européen des brevets

(11) **EP 3 585 588 B1**

(12) **EUROPÄISCHE PATENTSCHRIFT**

(45) Veröffentlichungstag und Bekanntmachung des Hinweises auf die Patenterteilung:
**02.12.2020  Patentblatt 2020/49**

(21) Anmeldenummer: **18707879.5**

(22) Anmeldetag: **21.02.2018**

(51) Int Cl.:
*B29C 45/28* (2006.01)     *B29C 45/84* (2006.01)
*B29C 45/17* (2006.01)

(86) Internationale Anmeldenummer:
**PCT/EP2018/054248**

(87) Internationale Veröffentlichungsnummer:
**WO 2018/153901 (30.08.2018 Gazette 2018/35)**

(54) **HEISSKANALVORRICHTUNG MIT EINER ÜBERLASTSICHERUNGSEINRICHTUNG**

HOT RUNNER DEVICE HAVING AN OVERLOAD PROTECTION DEVICE

DISPOSITIF À CANAUX CHAUFFANTS DOTÉ D'UN SYSTÈME DE SÉCURITÉ CONTRE LA SURCHARGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.02.2017  DE 102017104000**

(43) Veröffentlichungstag der Anmeldung:
**01.01.2020  Patentblatt 2020/01**

(73) Patentinhaber: **EWIKON Heisskanalsysteme GmbH**
**35066 Frankenberg (DE)**

(72) Erfinder:
• **EIMEKE, Stefan**
**35066 Frankenberg (DE)**
• **BRAUN, Peter**
**35410 Hungen (DE)**
• **MITTLER, Peter**
**35066 Frankenberg (DE)**

(74) Vertreter: **Specht, Peter et al**
**Loesenbeck - Specht - Dantz**
**Patent- und Rechtsanwälte**
**Am Zwinger 2**
**33602 Bielefeld (DE)**

(56) Entgegenhaltungen:
**DE-A1- 19 956 215      DE-A1-102013 006 257**
**DE-A1-102015 216 059     US-A1- 2010 044 896**
**US-A1- 2011 086 121**

**Beschreibung**

Die Erfindung betrifft eine Heißkanalvorrichtung mit einer Überlastsicherungseinrichtung für eine Verschlussnadel nach dem Oberbegriff des Anspruchs 1.

Es ist bekannt, Heißkanalvorrichtungen mit einer Überlastsicherungseinrichtung, die einen Formschluss oder einen Bruchmechanismus aufweisen, zu versehen, welche die bewegliche Verschlussnadel im Heißkanal bei der Schließbewegung bei Überlast automatisch aus dem Kraftfluss einer Antriebsvorrichtung aushängt, um Schaden an der Verschlussnadel zu vermeiden. Allerdings sind die bekannten Überlastsicherungseinrichtungen konstruktiv relativ aufwendig gestaltet und dennoch nur eingeschränkt funktionssicher.

Die US2011/086121 A1 offenbart eine Überlastsicherungseinheit aufweisend eine lösbare Formschlussverbindung oder eine lösbare Magnetverbindung. Die DE 10 2013 006 257 A1 offenbart eine Art reibschlüssiger Kupplungsvorrichtung im Zusammenhang mit dem Umsetzen rotatorischer Antriebskräfte in lineare Bewegungen. Zum technologischen Hintergrund wird ferner die US 2010/044896 A1 genannt.

Bei den bekannten Überlastsicherungseinrichtungen (es sei beispielsweise auf die gattungsgemäße DE 10 2015 216 059 A1 verwiesen, die einen Formschluss als nach Art einer Kupplung mit radial beweglichen Kugelkörpern als Überlastsicherungseinrichtung zeigt), muss ein relativ langer Weg der Verschlussnadel zurückgelegt werden, um diese Überlastsicherungseinrichtung auszulösen bzw. zu aktivieren. Wenn die Verschlussnadel während des Öffnens oder Schließens blockiert und der Weg nicht ausreicht, um die Überlastsicherungseinrichtung auszulösen, kann die Verschlussnadel beschädigt werden oder unbemerkt in eine unzulässige Position verstellt werden.

Die Erfindung hat die Aufgabe, dieses Problem zu beheben. Es soll eine Heißkanalvorrichtung mit einer einfach aufgebauten und zuverlässigen Überlastsicherungseinrichtung geschaffen werden.

Die Erfindung löst diese Aufgabe durch den Gegenstand des Anspruchs 1. Vorteilhafte Ausgestaltungen sind den Unteransprüchen zu entnehmen.

Nach Anspruch 1 wird folgender Gegenstand geschaffen: Eine Heißkanalvorrichtung, die zumindest eine Nadelverschlussdüse und eine in der Nadelverschlussdüse mit einem Bewegungsmittel (vorzugsweise in einer Richtung hin und her) bewegliche Verschlussnadel aufweist sowie eine Überlastsicherungseinrichtung für die Verschlussnadel, wobei die Überlastsicherungseinrichtung wie folgt realisiert ist: die Verschlussnadel ist in wenigstens einer ersten Bewegungsrichtung direkt oder indirekt durch wenigstens eine beim Überschreiten einer Grenzkraft lösbare Reibschlussverbindung mit dem Bewegungsmittel verbunden.

Vorteilhaft ist dabei, dass der Schutzmechanismus zur Überlastsicherung vorzugsweise ausschließlich über eine Reibschlussverbindung erfolgt und nicht über einen Formschluss oder einen Bruchmechanismus, wie bei den bekannten Lösungen. Denn es hat sich herausgestellt, dass über die Reibschlussverbindung die Auslösegrenzkraft, bei welcher die Überlastsicherungseinrichtung die Verschlussnadel freigibt, auf einfache Weise relativ genau einstellbar ist. Zudem lässt sich eine Reibschlussverbindung mit einfachen konstruktiven Mitteln bei nur geringem Bauraumbedarf realisieren. Dies wird weiter unten anhand von bevorzugten Ausführungsbeispielen und Unteransprüchen, auf welche die Erfindung aber nicht zu beschränken ist, näher erläutert. Der Auslöseweg geht bei der Erfindung vorteilhaft quasi bzw. in einem praktisch relevanten Maße gegen Null.

Nach alternativen Ausgestaltungen, die jeweils vorteilhaft realisierbar sind sowie ggf. auch kombinierbar sind, wird die Reibschlussverbindung entweder einerseits als Schrumpf-, Dehn- und/oder Dehnschrumpfverband und/oder andererseits über eine Selbsthemmung realisiert. Beide Prinzipien bilden vorteilhafte Ausgestaltungen sowie gut funktionsfähige Weiterbildungen des Gegenstandes des Anspruchs 1.

Dabei kann nach einer bevorzugten Variante vorgesehen sein, dass die Überlastsicherungseinrichtung ausschließlich auf einem reibschlüssigen Prinzip beruht, da derart die Auslösegrenzkraft besonders gut einstellbar ist.

Nach einer Variante ist nur eine einzige Reibschlussverbindung vorgesehen, welche lediglich in einer einzigen Bewegungsrichtung ein Freigeben der Verschlussnadel beim Überschreiten der Auslösegrenzkraft bewirkt, beispielsweise bei einem Verschließen einer Austrittsöffnung der Nadelverschlussdüse mit der Verschlussnadel. Es kann aber auch vorgesehen sein, dass die Verschlussnadel in zwei verschiedenen - insbesondere entgegengesetzten - Bewegungsrichtungen jeweils direkt oder indirekt durch wenigstens eine beim Überschreiten einer Grenzkraft lösbare Reibschlussverbindung mit dem Bewegungsmittel verbunden ist, um die Verschlussnadel sowohl bei Öffnungsbewegungen als auch bei Verschlussbewegungen der Verschlussnadel zum Öffnen bzw. Verschließen der Austrittsöffnung der Nadelverschlussdüse wirksam vor Beschädigungen zu schützen.

Konstruktiv kann die Erfindung beispielhaft - und auch vorteilhaft - nach einer Variante dadurch umgesetzt werden, dass eine oder beide der lösbaren reibschlüssigen Verbindungen jeweils als eine lösbare selbsthemmende Konus-Presssitzverbindung oder durch zwei lösbare Konus-Presssitzverbindungen realisiert ist/sind.

Es kann sodann nach einer konstruktiv einfach realisierbaren Variante vorgesehen sein, dass die erste lösbare Konus-Presssitzverbindung durch einen Außenkonus an der Verschlussnadel und korrespondierendem Innenkonus in dem Bewegungsmittel oder das Gegenlager der Verschlussnadel, insbesondere ein Stift, als erster Reibpartner, einer Hülse mit Innenkonus als zweiter Reibpartner sowie einer weiteren Hülse in dem Bewegungsmittel realisiert ist.

Nach einer weiteren konstruktiv vorteilhaften Variante insbesondere zur Realisierung einer zweiten Konus-Presssitzverbindung kann vorgesehen sein, dass diese durch einen Außenkonus an einer Hülse, welche von der Verschlussnadel durchsetzt ist, als erster Reibpartner und einen Innenkonus in dem Bewegungsmittel oder in einer in das Bewegungsmittel eingesetzten weiteren Hülse als zweiter Reibpartner gebildet wird.

Es ist zweckmäßig, wenn die Verschlussnadel mit dem Bewegungsmittel ausschließlich linear vor- und zurück beweglich ist. Es kann ferner vorteilhaft vorgesehen sein, dass die Verschlussnadel in und/oder gegen diese Richtung(en) ausschließlich reibschlüssig mit dem Bewegungsmittel verbunden ist. Nach einer Variante kann der Reibschluss aber auch durch einen Formschluss ergänzt werden, beispielsweise von einer kleinen umlaufenden Rille in dem einen Teil (Verschlussnadel oder Bewegungsmittel), die in eine korrespondierende umlaufende Nut des anderen Teils (Bewegungsmittel oder Verschlussnadel) rastend eingreift. Es soll aber vorzugweise die Auslösekraft von dem Reibschluss im Wesentlichen bestimmt sein, also zu mehr als 50% von dem Reibschluss bestimmt sein.

Es ist dabei vorgesehen, dass eine oder beide der reibschlüssigen und selbsthemmenden Verbindungen derart realisiert ist/sind, dass die Verschlussnadel oder das Gegenlager der Verschlussnadel reibschlüssig und selbsthemmend derart mit dem Bewegungsmittel verbunden ist, dass die Verschlussnadel bei einer axialen Krafteinleitung, die größer ist als die Haftreibung der reibschlüssigen Verbindung, die Selbsthemmung überschreitet und automatisch aushängt.

Vorteilhaft realisiert werden kann insbesondere auch eine Ausgestaltung, nach welcher vor Erreichen der Überlast keine axiale Verschiebung der Verschlussnadel relativ zum Bewegungsmittel stattfinden kann, da der Reibschluss derart gewählt ist, dass er keine elastische Verformung beim Auslösen zulässt.

Es ist weiter vorteilhaft, wenn nach einer Variante die Grenzkraft kleiner ist als eine aufgewendete Montagekraft (zum Einpressen der Verschlussnadel in das Bewegungsmittel). Zudem ist vorteilhaft die Höhe der Grenzkraft, abhängig von der Höhe der Montagekraft, einzustellen. Vorzugsweise erfolgt ferner über die Montagekraft in einfacher Weise eine Einstellung der Grenzkraft.

Es kann schließlich in Hinsicht auf den die Ausgestaltung der Erfindung als Schrumpfverband vorgesehen sein, dass der Schrumpfverband als ein zylindrischer Schrumpfverband ausgebildet ist, bei dem beispielsweise eine erwärmte Hülse auf einen zylindrischen Abschnitt, insbesondere auf ein Antriebsende, der Verschlussnadel durch Abkühlen aufgeschrumpft ist.

Es kann in Hinsicht auf eine Ausgestaltung der Erfindung als Dehnverband vorgesehen sein, dass der Dehnverband als ein zylindrischer Dehnverband ausgebildet ist, bei dem beispielsweise eine gekühlte Verschlussnadel in einen zylindrischen Abschnitt, der Hülse bzw. der Aufnahme durch Erwärmen auf Umgebungstemperatur aufgedehnt ist.

Es ist auch vorteilhaft möglich den Schrumpfverband und den Dehnverband nach einer Variante zu einem Schrumpfdehnverband zu kombinieren. Die durch Erwärmung und/oder Kühlung hergestellten Verbände werden auch Querpressverband genannt.

Vorteilhafterweise kann die Überlastsicherungseinrichtung einen Sensor aufweisen, der das Auslösen der Überlastsicherungseinrichtung detektiert und ein Signal an eine Steuerung der Spritzgussmaschine weiterleitet.

Vorteilhaft ist insgesamt, dass der Schutzmechanismus zur Überlastsicherung über eine Reibschlussverbindung erfolgt und nicht über einen Formschluss oder einen Bruchmechanismus, wie bei den bekannten Lösungen, so dass die Auslösekraft gut einstellbar ist und die Auslösung direkt bei Erreichen der Kraft erfolgt, ohne dass eine Verformung stattfinden oder ein Reaktionsweg zurückgelegt werden muss.

Nachfolgend wird die Erfindung unter Bezug auf die Zeichnung anhand von Ausführungsbeispielen näher beschrieben. Es zeigen:

Fig. 1 a), b) und c) oder d) jeweils einen Schnitt durch einen Abschnitt einer Heißkanalvorrichtung; wobei die Figurenteile a)b und d) einerseits bzw. a), c) und d) andererseits in einem gedachten aneinander gesetzten Zustand jeweils zwei verschiedene Betriebszustände der Heißkanalvorrichtung darstellen;

Fig. 2 in a) eine vergrößerte Schnittdarstellung von Komponenten der Heißkanalvorrichtung aus Fig. 1b) in einem Betriebszustand ohne Überlast und in b) die Komponenten aus a) nach dem Eintreten eines ersten Überlastfalles;

Fig. 3 in a) eine Schnittdarstellung von Komponenten einer ersten Variante einer Heißkanalvorrichtung nach Art der Fig. 1) in einem ersten Betriebszustand ohne Überlast und in b) die Komponenten aus a) nach dem Eintreten eines ersten Überlastfalles (Überlast bei Bewegung in positiver X-Richtung);

Fig. 4 in a) die Komponenten der ersten Variante einer Heißkanalvorrichtung gemäß Fig. 3a) in einem zweiten Betriebszustand ohne Überlast und in b) die Komponenten aus a) nach dem Eintreten eines anderen Überlastfalls (Überlast bei Bewegung in negativer X-Richtung) als in Fig. 3;

Fig. 5 in a) die Komponenten einer weiteren - konstruktiv einfach aufgebauten - Ausführung gemäß dem Prinzip nach Fig. 2 , in b) die Komponenten einer weiteren konstruktiv sehr einfach aufgebauten Ausführung nach dem Prinzip gemäß Fig. 3 und 4, bei denen der Kopf der Nadel konisch ausgebildet ist und in c) die Komponenten einer konstruktiv sehr einfach aufgebauten Ausführung nach dem Prinzip der Fig. 3 und 4 bei dem der Kopf der Nadel zylindrisch ausgebildet ist und ein konischer Stift das Gegenlager der Nadel bildet;

Fig. 6 in a) eine vereinfachte Schnittdarstellung einer Variante einer Heißkanalvorrichtung nach Art der Fig. 1) im Montagezustand von Selbsthemmungskomponenten mit Kraftvektoren und Winkeleinträgen zur Veranschaulichung der wirkenden Montagekräfte und in b) die Komponenten aus a) nach dem Eintreten eines ersten Überlastfalles mit den Kraftvektoren und Winkeleinträge zur Veranschaulichung der wirkenden Kräfte.

Fig. 7 ein Diagramm des Kraftverhältnisses Lösekraft /Montagekraft der selbsthemmenden Konusverbindung nach Fig. 2-5 als Funktion des Reibwerts $\mu$ und mit dem Flankenwinkel $\alpha$ der Konen als Parameter, wobei die konstruktive Ausgestaltung in Fig. 6 vereinfacht dargestellt ist.

Soweit nachfolgend Begriffe wie oben und unten oder rechts und links verwendet werden, beziehen diese sich auf die in den jeweiligen Zeichnungen dargestellte Lage. Die Einbaulage kann hiervon abweichen, so dass die Begriffe relativ zu beziehen sind.

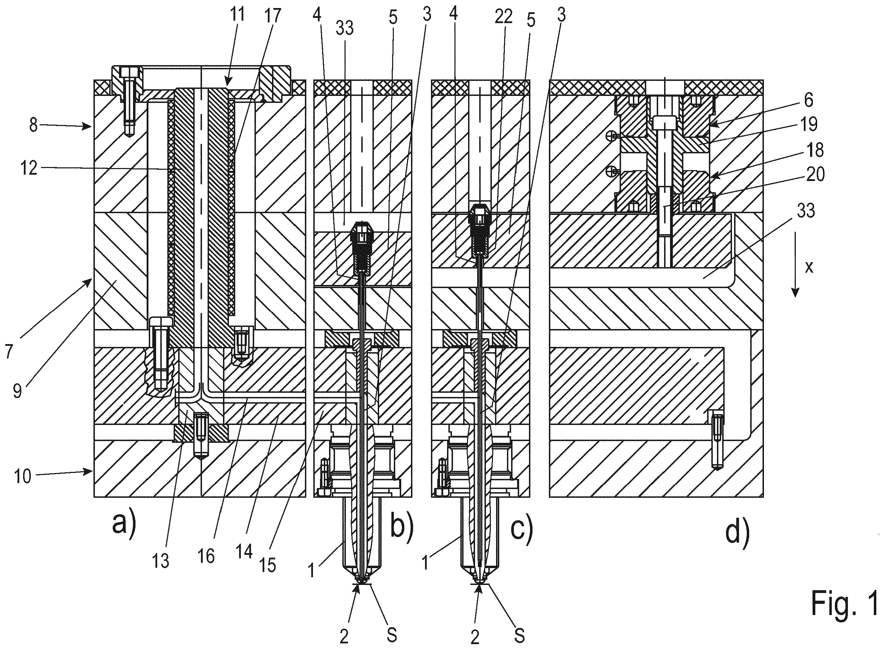

Fig. 1 zeigt im Zusammenspiel der Teile a), b) und d) bzw. a), c) und d) jeweils eine Schnittansicht eines Abschnittes einer Heißkanalvorrichtung mit einer Nadelverschlussdüse 1. Diese Vorrichtung ist für ein Spritzen von Kunststoffbauteilen ausgelegt. Das Kunststoffbauteil wird in einem Formwerkzeug gespritzt, das hier nur durch einen Strich S als Formplatte mit Öffnung angedeutet ist und ansonsten nicht dargestellt ist (siehe dazu beispielsweise die DE 10 2015216 059 A1), welche in der Regel eine Formplatte aufweist, die eine Anschnittsbohrung aufweist.

Die Fig. 1 ist in vier hier der Einfachheit halber beabstandet zueinander angeordnete Teile unterteilt, wobei die Teile a), b) und d) in einem gedachten aneinander gesetzten Zustand die Heißkanalvorrichtung in einer Geschlossenstellung darstellen und wobei die Teile a), c) und d) in einem gedachten aneinander gesetzten Zustand die Heißkanalvorrichtung in einem Offenzustand darstellen.

Das Ausflussende der Nadelverschlussdüse 1, das zur Formplatte hin ausgerichtet ist, ist in der Geschlossenstellung von einem Verschlussende 2 einer Verschlussnadel 3 verschließbar, so dass kein Kunststoff mehr aus der Nadelverschlussdüse 1 bzw. in die Form eintreten kann.

In Fig. 1b ist die Verschlussnadel 3 entsprechend in Richtung der Form bewegt worden (hier nach unten), so dass die Nadelverschlussdüse 1 geschlossen ist. In der Offenstellung der Fig. 1c ist die Verschlussnadel hingegen von der Form wegbewegt worden (hier nach oben), so dass die Nadelverschlussdüse 1 geöffnet ist. In diesem Zustand kann Kunststoff in die Form strömen.

Die Nadelverschlussdüse 1 und die Verschlussnadel 3 weisen eine Haupterstreckungsrichtung X auf. Die Verschlussnadel 3 wird beim Verschließen und Öffnen der Nadelverschlussdüse 1 begrenzt in und gegen die Richtung X relativ zu dieser bewegt.

Die Verschlussnadel 3 ist dazu an ihrem vom freien Ende 2 abgewandten - angetriebenen - Ende (nachfolgend auch Antriebsende genannt) 4 in einem Bewegungsmittel einer Hubvorrichtung gehalten. Dieses Bewegungsmittel kann als eine Hubplatte 5 ausgebildet sein. Das Bewegungsmittel ist mit Hilfe einer Antriebsvorrichtung 6 in Richtung X beweglich oder ist selbst ein Teil der Antriebsvorrichtung (z.B. ein Kolben).

Das Bewegungsmittel - hier die Hubplatte 5 - ist in einem Hubraum 33 eines Heißkanal-Spritzgießwerkzeugs mit mehreren Platten 8, 9, 10 in X-Richtung hin- und her relativ zu diesen beweglich, wobei in und an diesen Platten ein Heißkanalabschnitt 11 mit Heißkanal-Durchflusselementen 12, 13, 14, 15 ausgebildet ist. An dem sogenannten Verteiler - Durchflusselement 15 - ist hier die Nadelverschlussdüse 1 angebracht.

Die Heißkanal-Durchflusselemente 12 bis 15 und die Nadelverschlussdüse 1 weisen jeweils einen Kanalabschnitt auf, wobei diese Kanalabschnitte in ihrem Zusammenspiel einen Schmelzeleitkanal 16 ausbilden, der zwischen dem Verschlussende 2 der Nadelverschlussdüse 1 und dem Antriebsende 4 der Verschlussnadel in einen Ringraum um die Verschlussnadel 3 mündet und der bis zu dem offenen Auslass-Ende der Nadelverschlussdüse 1 reicht, so dass durch ein Bewegen der Verschlussnadel 3 der Schmelzefluss in die Formplatte (bei S) freigegeben oder verschlossen werden kann. Zwischen den Heißkanalelementen 12, 13, 14, 15 und dem übrigen Werkzeug 7 ist ein Spalt ausgebildet, um den heißen bzw. warmen Bereich von einem relativ dazu kälteren Bereich zu trennen. Damit die Kunststoffschmelze im Angusssystem fließfähig bleibt, kann dieses jedenfalls abschnittsweise beheizbar ausgelegt sein (siehe die Heizung 17).

Das Bewegen der Verschlussnadel 3 kann beispielhaft mit Hilfe eines fluidbetätigbaren Antriebszylinders 18 als Antriebsvorrichtung 6 erfolgen, der einen beweglichen Kolben 19 mit einer Kolbenstange 20 aufweist, die direkt oder indirekt (d.h. überzwischengeschaltete Mittel) an dem Bewegungsmittel - hier der Hubplatte 5 - befestigt ist. Die Antriebsvorrichtung kann auch anders realisiert werden, so beispielsweise als Elektromotor oder Elektromagnet oder als Hydraulikzylinder. Es ist auch denkbar, dass der Kolben 19 selbst das Bewegungsmittel bildet, an dem die Verschlussnadel 3 lösbar befestigt ist.

Es ist ohne weiteres möglich, auch mehrere der Verschlussnadeln 3 an der Hubplatte 5 zu befestigen und die Hubplatte 5 dennoch mit nur einer Antriebsvorrichtung zu bewegen.

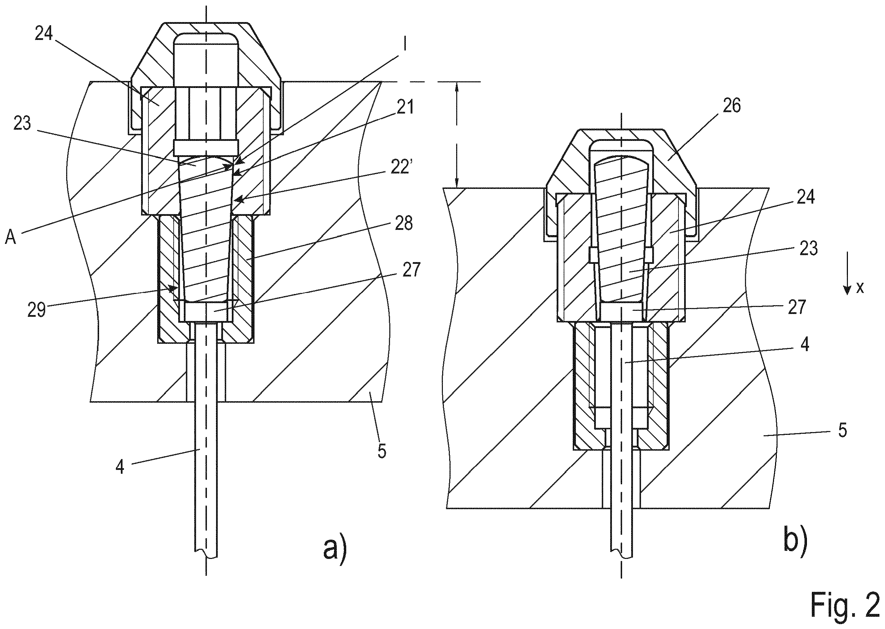

Die hier dargestellte Verschlussnadel 3 ist mit ihrem Antriebsende 4 über eine Überlastsicherungseinrichtung, die hier als eine (erste) reibschlüssige Verbindung bzw. als eine Reibschlussverbindung 21 ausgestaltet ist (siehe auch Fig. 2), in oder an dem Bewegungsmittel, hier der Hubplatte 5, lösbar befestigt. Es ist insbesondere vorgesehen, dass die Überlastsicherungseinrichtung wie folgt realisiert ist: die Verschlussnadel 3 ist in wenigstens einer ersten Bewegungsrichtung direkt oder indirekt durch wenigstens eine beim Überschreiten einer Grenzkraft lösbare Reibschlussverbindung 21 mit dem Bewegungsmittel, insbesondere einem Hubmittel, verbunden. Dabei ist die Reibschlussverbindung 21 hier nach einer vorteilhaften Variante als selbsthemmende Verbindung ausgebildet.

Dazu ist die wenigstens eine Reibschlussverbindung 21 derart ausgelegt, dass die Verschlussnadel in einem normalen Betrieb beim Hin- und Herbewegen des Bewegungsmittels zum Öffnen und Verschließen der Nadelverschlussdüse 1 sicher und fest in dem Bewegungsmittel gehalten ist. Lediglich in einem Überlastfall bei einem Überschreiten einer Grenzkraft wird die Reibkraft der Reibschlussverbindung 21 überwunden, so dass die Verschlussnadel 3 bzw. deren Bewegungsende 4 aus ihrem festen Sitz (zum Beispiel gebildet aus Stift 23, Hülse 24 und zweiter Hülse 28) in dem Bewegungsmittel, hier der Hubplatte 5, gelöst wird, so dass sich das Bewegungsmittel relativ zu der Verschlussnadel 3 in X-Richtung bewegen kann. Derart wird die Überlastsicherungsfunktion/-einrichtung mit einfachen konstruktiven Mitteln umgesetzt.

Nachfolgend seien näher verschiedene vorteilhafte Ausführungsformen der Erfindung betrachtet, auf welche die Erfindung aber nicht beschränkt ist.

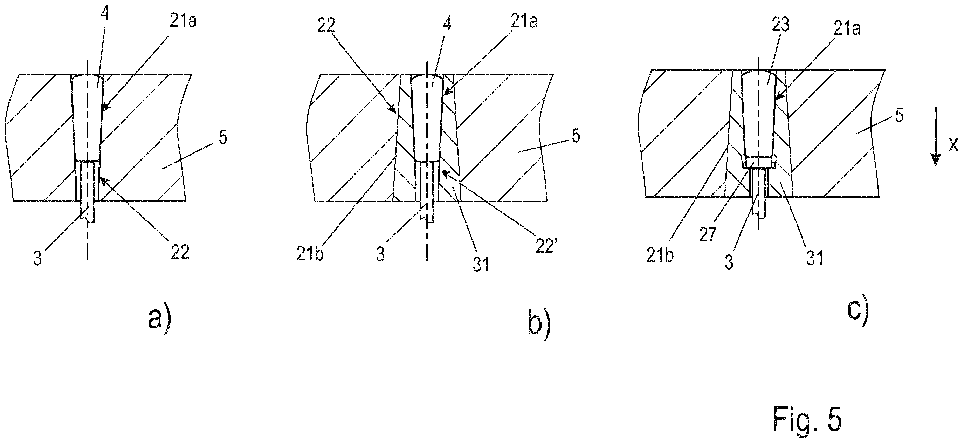

[Nach einer ersten bevorzugten Variante ist das Bewegungsmittel, hier die Hubplatte 5, von einer gestuften Bohrung 22 durchsetzt, die teilweise ein Gewinde aufweisen kann (Fig. 1 bis 5). In diese Bohrung 22 greift das Antriebsende 4 der Verschlussnadel 3 ein. Dabei ist an das Antriebsende 4 der Verschlussnadel 3 in axialer Verlängerung derselben ein Stift 23 angesetzt. Dieser Stift 23 kann alternativ - siehe hierzu beispielhaft Fig.5a und 5b - auch einstückig an dem Antriebsende 4 der Verschlussnadel 3 ausgebildet sein.

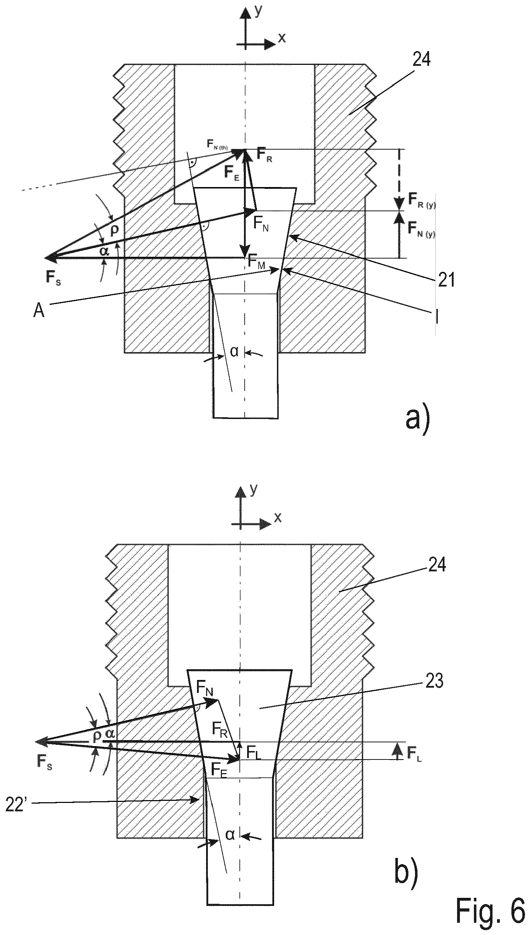

Der Stift 23 weist eine konische Außenform auf und ist direkt mit Reibschluss in der konischen Bohrung 22' lösbar gehalten und festgesetzt. Dazu ist der Stift 23 bei seiner Montage mit einer vorbestimmten Kraft in die Bohrung 22' eingedrückt worden. Die Reibschlußverbindung 21 wird hier somit durch den Stift 23 mit dem Außenkonus A und der Bohrung 22' mit dem jedenfalls abschnittsweise vorgesehenen Innenkonus I und der Reibung zwischen Stift 23 und Bohrung 22' gebildet (siehe Fig. 5 und 6).

Vorzugsweise ist die Bohrung 22' jedenfalls abschnittsweise innen korrespondierend konisch zu der konischen Form des Stiftes 23 geformt (siehe Fig. 5 und 6). Hier verengt sich der Stift von oben nach unten, d.h. in der Richtung X, in welche die Verschlussnadel 3 bei einer Verschlussbewegung in die Stellung der Fig. 1c) bewegt wird.

Der Stift 23 kann alternativ auch direkt in eine Bohrung 22 des Bewegungsmittels, insbesondere die Hubplatte 5, eingesetzt sein (ähnlich zu Fig. 5a, hier nicht zeichnerisch dargestellt) oder in ein in das Bewegungsmittel, insbesondere die Hubplatte 5, eingesetztes Bauteil (Fig. 2 - 4).

Vorzugsweise kann dieses Bauteil eine Hülse 24/31 sein. Die Hülse 24 ist in weiter bevorzugter Ausgestaltung als Schraube mit einem Außengewinde ausgestaltet, die in einen mit Innengewinde versehenen Abschnitt der Bohrung 22 eingesetzt ist und selbst eine zur Bohrung 22 konzentrische innere Bohrung 22' aufweist. Der Begriff "Bohrung" ist hier sowie insgesamt in dieser Anmeldung im Sinne einer Öffnung, insbesondere einer Durchgangsöffnung, zu verstehen, die nicht zwingend durch Bohren hergestellt sein muss.

Das Bewegungsmittel 5 drückt über den Stift 23 hier bei der Schließbewegung auf den Verschlussnadelkopf 27 bzw. das freie Ende 4 der Verschlussnadel 3, um die Verschlussnadel 3 axial linear in Richtung X zu bewegen.

Sowohl der Stift 23 als auch entweder die Bohrung 22 in dem Bewegungsmittel oder die dazu vorzugsweise konzentrische Bohrung 22' in dem Bauteil, insbesondere der Hülse 24, weisen über ihre gesamte Länge in X-Richtung oder jedenfalls abschnittsweise jeweils einen korrespondierenden Außenkonus A bzw. einen Innenkonus I auf.

Der Stift 23 wird bzw. wurde bei seiner Montage in dem Bewegungsmittel 5 bzw. hier in der Hülse 24, über seinen Außenkonus A mit einer definierten Kraft in den Innenkonus I des ihn umgebenden Körper - die Hülse 24 oder direkt das Bewegungsmittel - gedrückt.

Nach einer Variante kann vorgesehen sein, dass die Verschlussnadel 3 anstatt eines separaten Stiftes 23 direkt an ihrem einen Ende einen Außenkonus A aufweist und so direkt reibschlüssig mit dem Bewegungsmittel 5 (oder dessen Hülse 24) verbunden ist. Die Verschlussnadel 3 weist dann keinen separaten Stift auf, sondern bildet diesen Stift mit ihrem Ende selbst aus. Diese Variante ist in Fig. 5 dargestellt. Fig. 5 zeigt in a) die Komponenten einer Ausführung gemäß dem Prinzip nach Fig. 2, bei der die Bohrung 22 in der Hubplatte 5 direkt konisch ausgebildet ist und bei der das Antriebsende 4 der Verschlussnadel 3 korrespondierend konisch als Stift ausgebildet ist.

Insgesamt ist der Stift 23 reibschlüssig und selbsthemmend mit dem umliegenden Körper - vorzugsweise der Hülse 24 oder der Formplatte 5 - verbunden, so dass ein translatorisches Bewegen des Bewegungsmittels 5 den Stift und damit auch die Verschlussnadel 3 mit in Richtung X oder in die Gegenrichtung -X bewegt. Derart kann die Verschlussnadel 3 zwischen der Geschlossenstellung (siehe beispielhaft Fig. 1b) und der Offenstellung (siehe beispielhaft Fig. 1c) hin und her bewegt werden.

Während der Schließbewegung, bei der das Bewegungsmittel - hier die Hubplatte 5 - in Richtung -X bewegt wird, übt die Verschlussnadel 3 eine axiale Kraft auf den Stift 23 bzw. auf den Reibschlussbereich zwischen dem Innenkonus I und dem Außenkonus A aus. Überschreitet diese axiale Kraft die Haftreibung der reibschlüssigen Verbindung, löst sich der Stift 23 vom umliegenden Körper - vorzugsweise der Hülse 24 oder der Hubplatte 5 - und die Verschlussnadel 3 wird nicht mehr durch den Körper bzw. die Antriebsvorrichtung in Schließrichtung -X bewegt.

In anderen Worten bedeutet dies, dass der Stift 23 auslöst und nicht mehr als Gegenlager für die Verschlussnadel 3 dient. Dies ist beispielsweise in Fig. 2b zu erkennen. Hier hat sich die Reibschlussverbindung 21 nach einem Bewegen des Bewegungsmittels gelöst (diese Bewegung ist hier nicht zu erkennen) und die Verschlussnadel 3 konnte sich daher relativ zum Bewegungsmittel bewegen. Eine Beschädigung der Verschlussnadel 3 kann bzw. konnte derart vermieden werden.

Durch eine geeignete Einstellung der Montagekraft kann die Grenzkraft bzw. kritische Kraft, bei welcher der Stift 23 auslösen soll, ebenfalls eingestellt werden. Derart wird die Verschlussnadel 3 auf einfache Weise vor Schäden durch Überlast bewahrt.

Das Bewegungsmittel kann verschieden ausgestaltet werden. Es kann beispielsweise auch direkt ein Kolben sein oder beispielsweise die bereits beschriebene Hubplatte 5. Eine Hubplatte 5 wird vorzugsweise - aber nicht nur - dann gewählt, wenn in ihr eine oder mehrere der Verschlussnadeln eingebaut werden sollen.

Optional kann auf die Hülse 24 an ihrem von der Verschlussnadel 3 abgewandten Ende eine Abdeckkappe 26 aufgesetzt sein (Fig. 2a), welche vorteilhaft die Bohrung 22 abdeckt und ein Herausfallen des ausgelösten Stiftes 23 in den Hubraum der Hubplatte verhindert.

Es ist weiter vorteilhaft, wenn die Verschlussnadel 3 nach einer Variante an ihrem Ende 4 einen Kopf 27 mit einem gegenüber dem sonstigen Durchmesser der Verschlussnadel 3 verbreiterten Durchmesser aufweist, mit dem sie axial an dem Stift 23 anliegt und/oder befestigt ist, so dass eine gute Kraftübertragung zwischen dem Stift 23 und der Verschlussnadel 3 gewährleistet ist, insbesondere, wenn diese nicht einstückig ausgebildet sind.

Nach einer weiteren optionalen Weiterbildung ist ferner vorteilhaft vorgesehen, dass unterhalb der Hülse 24 eine zweite Hülse 28 in die Bohrung 22 eingesetzt ist. Diese weitere Hülse 28 kann zwischen einem Absatz der gestuften Bohrung 22 des Bewegungsmittels und der ersten Hülse 24- insbesondere da diese Hülse 24 als Schraube ausgebildet ist - fixiert sein. Die zweite Hülse 28 weist vorzugsweise selbst eine gestufte Innenbohrung 29 auf. Dabei ist der Kopf der Nadel 27 in der Innenbohrung 29 beweglich geführt. Hier schlägt er nach unten hin gegen einen Bund der Innenbohrung 29 an, so dass er nicht aus der Innenbohrung 29 austreten kann. In der Regel ist die maßliche Abstimmung so gewählt, dass der Kopf der Nadel 27 zwischen dem Stift 23 und dem Bund der gestuften Bohrung 29 ein geringes Spiel aufweist, so dass sich die Nadel 3 quer zur Hauptbewegungsrichtung X verschieben kann, um thermische Verspannungen zu vermeiden.

In Fig. 2a ist gut zu erkennen, dass der Stift 23 mit seinem Außenkonus A in den Innenkonus der Hülse 24 eingepresst ist. Die Verschlussnadel 3 ist (siehe auch Fig. 1 c) nach oben bewegt, was hier einer offenen Stellung an der Nadelverschlussdüse 1 entspricht. In Fig. 2b ist zu erkennen, dass sich die Verschlussnadel 3 und der Stift 23 relativ zur Hubplatte 5 bewegt haben (Hubbewegung, erkennbar ist jeweils aus dem Versatz der Hubplatte 5 zwischen den Figuren 2a und 2b der jeweilige Hub). Die Hubplatte 5 wurde nach unten bewegt. Dieser Bewegung ist die Verschlussnadel 3 nicht gefolgt, da auf sie in hier nicht erkennbarer Weise eine störende Kraft einwirkt, die größer ist als die Einpresskraft zum Montieren des Stiftes 3 in dem Bewegungsmittel, insbesondere in der ersten Hülse 24. Der Stift 23 ist aus seinem Presssitz/Reibsitz gelöst worden und ist der Bewegung des Bewegungsmittels nicht gefolgt.

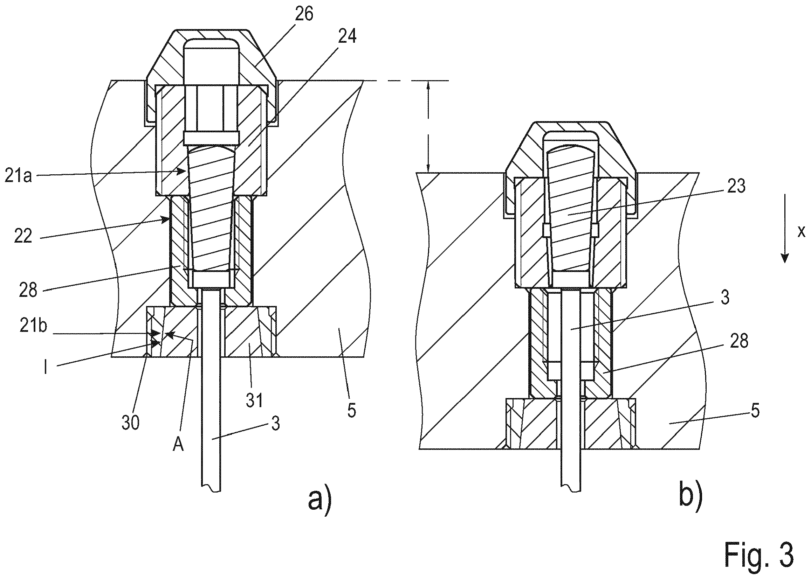

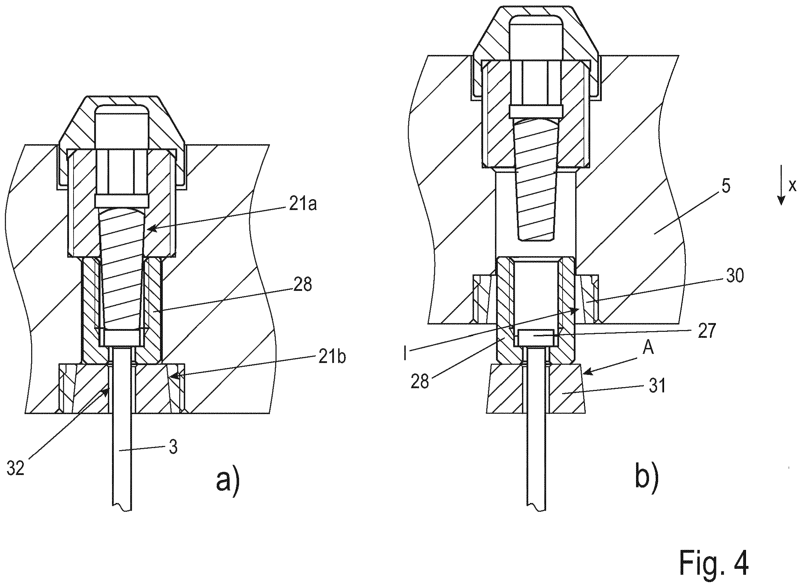

Die Variante der Fig.3 und 4 unterschiedet sich von der Variante der Fig.2 dadurch, dass die Überlastsicherungseinrichtung derart ausgestaltet ist, dass sie in zwei Richtungen +X und -X auslösen kann.

Dazu weist die Überlastsicherungseinrichtung hier vorteilhaft zwei (hier örtlich getrennte) Reibschlußverbindungen 21a und 21b auf.

Konstruktiv ist dies auf verschiedene Weise realisierbar. Nach der in Fig. 3 und 4 dargestellten Variante ist zusätzlich zu der Reibschlussverbindung 21a, in einen hier unteren gestuften Abschnitt der Bohrung 22 eine (hier zweite) Schraubhülse 30 eingesetzt. Diese Schraubhülse 30 ist auf der der ersten Hülse 24 gegenüberliegenden Seite der Hubplatte 5 angebracht. Die Schraubhülse 30 weist einen Innenkonus I auf. In sie ist eine Innenhülse 31 eingepresst, die einen Außenkonus A aufweist. Dabei verjüngt sich diese Konus-Presssitzverbindung 21b in entgegengesetzter Richtung (hier in Richtung -x) wie die erste Konus-Presssitzverbindung 21a.

Die Verschlussnadel 3 durchsetzt die Innenhülse 31. Diese ist wiederum hier derart gestaltet, dass die zweite Hülse 28 nach oben hin auf ihr aufliegt. Der Stift 23 und/oder der Kopf 27 können nicht aus unteren Hülse 28 nach unten ausfallen oder austreten, da der Durchmesser wenigstens eines oder beider dieser Elemente größer ist als der Innendurchmesser der Bohrung 32 der Innenhülse 31.

Die Funktion der zweiten Reibschlussverbindung 21b als Teil der Überlastsicherungseinrichtung ist wie folgt:

Die Verschlussnadel 3 ist in Fig. 4a mit dem Bewegungsmittel nach unten bewegt worden, was hier einer geschlossenen Stellung an der Nadelverschlussdüse 1 entspricht. Soll jetzt die Verschlussnadel 3 aus der Geschlossenstellung in eine Offenstellung bewegt werden, liegt der Kopf 27 am unteren Ringbund der zweiten Hülse 28 an, so dass die Verschlussnadel 3 durch die Bewegung des Bewegungsmittels mitsamt den darin eingeschraubten und eingesetzten Hülsen und Stiften 23, 24, 28, 30, 31 mit angehoben wird.

In Fig. 4b ist zu erkennen, dass sich die Verschlussnadel 3 bzw. der Kopf 27, die zweite Hülse 28 und die Innenhülse 31 relativ zu der Hubplatte 5 bewegt haben. Die Hubplatte 5 wurde nach oben bewegt. Dieser Bewegung ist die Verschlussnadel 3 nicht gefolgt, da auf sie in hier nicht erkennbarer Weise eine störende Kraft einwirkt, die größer ist als die Einpresskraft zum Montieren der außen konischen Hülse 31 in dem Bewegungsmittel, insbesondere in der Schraubhülse 30. Die innere außen konische Hülse 31 ist aus ihrem Presssitz/Reibsitz in dem Montagemittel, insbesondere in der innen konischen Schaubhülse 30 gelöst worden und ist der Bewegung des Bewegungsmittels nicht gefolgt.

Nach Fig. 5b und 5c werden auch jeweils zwei Überlastsicherungseinrichtungen als Überlastsicherungen sowohl beim Heben bzw. auch beim Absenken der Verschlussnadel 3 mit zwei Konus-Presssitzverbindungen 21a, 21b realisiert, die in verschiedene Richtungen wirken. Die konstruktive Ausgestaltung ist aber besonders einfach, was vorteilhaft aber für die Funktion der Erfindung nicht zwingend ist.

Auch nach Fig. 5b und 5c ist entweder das konische Antriebsende 4 oder ein konischer Stift 23 in eine Hülse 31 eingesetzt, die eine Bohrung 22' aufweist, die korrespondierend konisch zum Stift 23 ausgebildet ist. Derart wird wiederum eine Konus-Presssitzverbindung 21a realisiert. Der Innenkonus und der Außenkonus weiten sich hier in eine erste Richtung "nach oben" hin auf (Richtung -X). Dies entspricht der ersten Überlastsicherungseinrichtung nach Fig. 5a. Die Hülse 31 entspricht hier somit jeweils auch der Hülse 24 der Fig. 2 bis 4.

Zudem sind aber auch die Außenkontur der Hülse 31 und die Innenkontur der Bohrung 22 in der Hubplatte 5 korrespondierend konisch gestaltet. Innenkonus und Außenkonus weiten sich hier in eine zwei Richtung "nach unten" hin auf (Richtung X). Nach Fig. 5b und c weitet sich die Bohrung 22 in der Hubplatte somit nach unten in Richtung X konisch auf, so dass sich die Hülse 31 bei Überlast aus ihrem Reibschlusssitz in Fig. 5b nach unten hin lösen kann. Dies ist jeweils die zweite Überlastsicherungseinrichtung.

Nach Fig. 5b ist das Antriebsende 4 der Verschlussnadel 3 einstückig konisch ausgebildet und bildet derart selbst den Stift 23 aus. Nach Fig. 5c ist hingegen ein Stift 23 auf das Antriebsende 4 (das hier wiederum als ein zylindrischer Kopf 27 ausgebildet ist) aufgesetzt.

Auch diese Varianten sind konstruktiv einfach aufgebaut und dennoch gut funktionsfähig.

Durch die zwei Reibverbindungen nach Fig. 3 bis 5 kann vorteilhaft in beide mögliche Bewegungsrichtungen der Nadelverschlussdüse jeweils die Überlastsicherungseinrichtung zuverlässig auslösen.

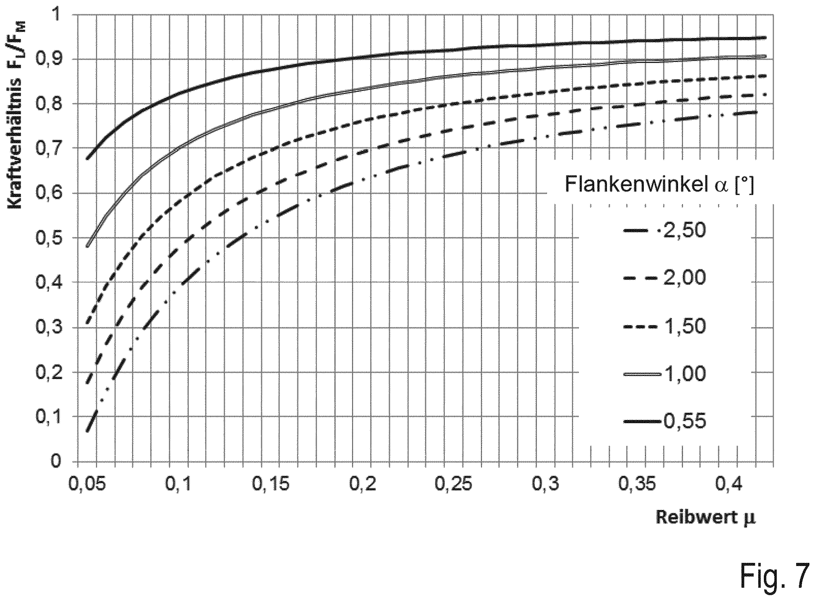

Nachfolgend sei die Funktionsweise einer Überlastsicherung nochmals detaillierter unter Bezug auf Fig. 6 und 7 beschrieben, die einen konstruktiv vereinfacht dargestellten, aber dennoch theoretisch funktionsfähigen Aufbau zeigt.

Bei seiner Erstmontage wird der konische Stift 23 mittels einer geeigneten Vorrichtung (hier nicht zu erkennen) mit einer Kraft $F_M$ - siehe Fig. 6a - in die konische Bohrung 22' der Hülse 24 eingepresst. Über die Flanken (Flankenwinkel $\alpha$) des Konus der Konus-Reibschlußverbindung wird folglich eine Normalkraft $F_N$ aufgebaut. Der Montagekraft $F_M$ wirkt der Reibung (Reibwert $\mu = \tan\rho$) entgegen und erzeugt die Reibkraft $F_R$. Dadurch wird die theoretisch erreichbare Normalkraft $F_{N(th)}$ reduziert und die x-Komponente der Ersatzkraft $F_E$ auf die verbleibende Spreizkraft Fs reduziert. So lange aber die y-Komponente $F_{N(y)}$ der Normalkraft $F_N$ kleiner als die y-Komponente $F_{R(y)}$ der Reibkraft $F_R$ ist, liegt Selbsthemmung vor und der konische Stift kann nur mit einer Lösekraft $F_L$ (siehe Fig. 6b) wieder herausgedrückt werden.

Dem Kraftdiagramm der Fig. 7 kann entnommen werden, dass Selbsthemmung vorliegt für:

$$\rho \geq \alpha.$$

Die Kraftverhältnisse bei einem Demontagevorgang veranschaulicht Fig. 6b. Die genaue Lösekraft $F_L$ kann Fig. 7 entnommen werden. Dazu muss beachtet werden, dass sich bei Wegnahme der Montagekraft $F_M$, die Richtung der Reibkraft $F_R$ umkehrt und damit die Normalkraft $F_N$, bei gleicher Spreizkraft $F_S$, kleiner wird, weil die x-Komponente der Reibkraft $F_{R(x)}$ der Spreizkraft $F_S$ nun entgegenwirkt. Die notwendige Lösekraft $F_L$ wird hauptsächlich von der Montagekraft $F_M$ bestimmt und hängt, wie die Kraftdiagramme zeigen, sowohl von dem Flankenwinkel $\alpha$ als auch von dem Reibwert $\mu = \tan\rho$ ab.

Wie die Einflussgrößen auf die Lösekraft wirken (qualitativ), ist Fig. 7 zu entnehmen. Es gilt:

$$\frac{F_L}{F_M} = \frac{\tan(\rho - \alpha)}{\tan(\rho + \alpha)} \quad , \rho = \arctan(\mu)$$

**Bezugszeichen**

| | |
|---|---|
| Nadelverschlussdüse | 1 |
| Verschlussende | 2 |

(fortgesetzt)

| | |
|---|---|
| Verschlussnadel | 3 |
| Antriebsende | 4 |
| Hubplatte | 5 |
| Antriebsvorrichtung | 6 |
| Werkzeug | 7 |
| Platten | 8, 9, 10 |
| Heißkanalabschnitt | 11 |
| Heißkanal-Durchflusselemente | 12, 13, 14, 15 |
| Schmelzeleitkanal | 16 |
| Heizung | 17 |
| Antriebszylinder | 18 |
| Kolben | 19 |
| Kolbenstange | 20 |
| Reibschlußverbindung | 21, 21a, 21b |
| Bohrung | 22 |
| Bohrung | 22' |
| Stift | 23 |
| Hülse | 24 |
| Abdeckkappe | 26 |
| Kopf | 27 |
| zweite Hülse | 28 |
| Innenbohrung | 29 |
| Schraubhülse | 30 |
| Innenhülse | 31 |
| Bohrung | 32 |
| Hubraum | 33 |
| Außenkonus | A |
| Innenkonus | I |
| Richtung | X |
| Formplatte | S |
| Winkel | $\alpha$ |
| Reibwinkel | $\rho$ |
| Montagekraft | $F_M$ |
| Normalkraft | $F_N$ |
| Reibkraft | $F_R$ |
| Ersatzkraft | $F_E$ |
| Spreizkraft | $F_S$ |
| Lösekraft | $F_L$ |
| Reibwert | $\mu$ |

**Patentansprüche**

1. Heißkanalvorrichtung, die zumindest eine Nadelverschlussdüse (1) und eine in der Nadelverschlussdüse (1) mit einem Bewegungsmittel bewegliche Verschlussnadel (3) aufweist sowie eine Überlastsicherungseinrichtung für die Verschlussnadel (3), **dadurch gekennzeichnet, dass** die Überlastsicherungseinrichtung wie folgt realisiert ist: die Verschlussnadel ist in wenigstens einer ersten Bewegungsrichtung direkt oder indirekt durch wenigstens eine beim Überschreiten einer Grenzkraft lösbare Reibschlussverbindung (21) mit dem Bewegungsmittel verbunden.

2. Heißkanalvorrichtung nach Anspruch 1, **dadurch gekennzeichnet, dass** die Reibschlussverbindung (21a) als selbsthemmende Verbindung ausgebildet ist.

3. Heißkanalvorrichtung nach Anspruch 1, **dadurch gekennzeichnet, dass** die Reibschlussverbindung (21b) als Querpressverband ausgebildet ist.

4. Heißkanalvorrichtung nach einem der vorstehenden Ansprüche, **dadurch gekennzeichnet, dass** die Überlastsicherungseinrichtung ausschließlich auf einem reibschlüssigen Prinzip beruht.

5. Heißkanalvorrichtung nach einem der vorstehenden Ansprüche, **dadurch gekennzeichnet, dass** die Überlastsicherungseinrichtung wie folgt realisiert ist: die Verschlussnadel ist in zwei verschiedenen Bewegungsrichtungen (X; -X) jeweils direkt oder indirekt durch wenigstens zwei beim Überschreiten einer Grenzkraft jeweils lösbare Reibschlussverbindungen (21) mit dem Bewegungsmittel verbunden.

6. Heißkanalvorrichtung nach einem der vorstehenden Ansprüche, **dadurch gekennzeichnet, dass** eine oder beide der Reibschlussverbindungen (21a, 21b) jeweils durch eine lösbare selbsthemmende Konus-Presssitzverbindung realisiert ist/sind.

7. Heißkanalvorrichtung nach einem der vorstehenden Ansprüche, **dadurch gekennzeichnet, dass** die erste lösbare Konus-Presssitzverbindung durch einen Außenkonus an der Verschlussnadel (3) oder an dem Gegenlager der Verschlussnadel (3), insbesondere einem Stift (23), als erster Reibpartner und einen Innenkonus in einer Bohrung in dem Bewegungsmittel oder in einem in das Bewegungsmittel eingesetztes Bauteil, insbesondere eine Hülse (24) als zweiter Reibpartner realisiert ist.

8. Heißkanalvorrichtung nach einem der vorstehenden Ansprüche, **dadurch gekennzeichnet, dass** die zweite lösbare Konus-Presssitzverbindung durch einen Außenkonus (A) an einer Hülse (31), welche von der Verschlussnadel (3) durchsetzt ist, als erster Reibpartner und einen Innenkonus (I) in dem Bewegungsmittel oder in einer in das Bewegungsmittel eingesetzten weiteren Hülse (30) als zweiter Reibpartner realisiert ist.

9. Heißkanalvorrichtung nach einem der vorstehenden Ansprüche, **dadurch gekennzeichnet, dass** die Verschlussnadel (3) mit dem Bewegungsmittel in einer Richtung (X) linear hin- und her beweglich ist, insbesondere ausschließlich linear beweglich ist, und dass die Verschlussnadel in und/oder gegen die Richtung (X) ausschließlich reibschlüssig mit dem Bewegungsmittel verbunden ist.

**10.** Heißkanalvorrichtung nach einem der vorstehenden Ansprüche, **dadurch gekennzeichnet, dass** das Bewegungsmittel eine von einer Antriebsvorrichtung bewegliche Hubplatte (5) aufweist.

**11.** Heißkanalvorrichtung nach einem der vorstehenden Ansprüche, **dadurch gekennzeichnet, dass** eine oder beide der reibschlüssigen und/oder selbsthemmenden Verbindungen derart realisiert ist, dass die Verschlussnadel (3) oder das Gegenlager der Verschlussnadel reibschlüssig und selbsthemmend derart mit dem Bewegungsmittel verbunden ist, dass die Verschlussnadel (3) bei einer axialen Krafteinleitung, die größer ist als die Haftreibung der reibschlüssigen Verbindung, die Selbsthemmung überschreitet und automatisch aushängt.

**12.** Heißkanalvorrichtung nach einem der vorstehenden Ansprüche, **dadurch gekennzeichnet, dass** vor Erreichen der Überlast keine axiale Verschiebung der Verschlussnadel (3) stattfindet, da der Reibschluss keine elastische Verformung beim Auslösen zulässt.

**13.** Heißkanalvorrichtung nach einem der Ansprüche 3 bis 12, **dadurch gekennzeichnet, dass** der Querpressverband als Schrumpf-, Dehn- und/oder Dehnschrumpfverband ausgebildet ist.

**14.** Heißkanalvorrichtung nach Anspruch 13, **dadurch gekennzeichnet, dass** die Schrumpfverbindung als eine zylindrische Schrumpfverbindung ausgebildet ist.

**15.** Heißkanalvorrichtung nach einem der Ansprüche 2 bis 14, **dadurch gekennzeichnet, dass** die Grenzkraft kleiner ist als eine aufgewendete Montagekraft.

**16.** Heißkanalvorrichtung nach Anspruch 15, **dadurch gekennzeichnet, dass** die Höhe der Grenzkraft abhängig von der Höhe der Montagekraft ist und über die Montagekraft die Einstellung der Grenzkraft erfolgt.

**Claims**

**1.** Hot runner device, which comprises at least one needle valve nozzle (1) and a shut-off needle (3) which is movable with a moving means in the needle valve nozzle (1), as well as an overload protection device for the shut-off needle (3), **characterized in that** the overload protection device is realized as follows: the shut-off needle is connected to the moving means in at least one first direction of movement directly or indirectly by at least one frictional connection (21) which is releasable when exceeding a limit force.

**2.** Hot runner device according to claim 1, **characterized in that** the frictional connection (21a) is designed as a self-locking connection.

**3.** Hot runner device according to claim 1, **characterized in that** the frictional connection (21b) is formed as a cross-press assembly.

**4.** Hot runner device according to one of the preceding claims, **characterized in that** the overload protection device is based solely on a frictional principle.

**5.** Hot runner device according to one of the preceding claims, **characterized in that** the overload protection device is realized as follows: the shut-off needle is connected to the moving means in two different directions of movement (X; -X) in each case directly or indirectly by at least two frictional engagement connections (21) which are each releasable when a limit force is exceeded.

**6.** Hot runner device according to one of the preceding claims, **characterized in that** one or both of the frictional engagement connections (21a, 21b) is/are realized in each case by a releasable self-locking cone press-fit connection.

**7.** Hot runner device according to one of the preceding claims, **characterized in that** the first releasable cone press-fit connection is realized by an outer cone on the shut-off needle (3) or on the abutment of the shut-off needle (3), in particular a pin (23), as the first friction partner, and an inner cone in a bore in the moving means or in a component inserted into the moving means, in particular a sleeve (24), as a second friction partner.

**8.** Hot runner device according to one of the preceding claims, **characterized in that** the second releasable cone press-fit connection is realized by an outer cone (A) on a sleeve (31), which is penetrated by the shut-off needle (3), as the first friction partner, and an inner cone (I) in the moving means or in a further sleeve (30) inserted into the moving means as a second friction partner.

**9.** Hot runner device according to one of the preceding claims, **characterized in that** the shut-off needle (3) linearly movable in a reciprocating manner with the moving means in a direction (X), in particular exclusively linearly movable, and that the shut-off needle is only frictionally connected to the moving means in and/or against the direction (X).

**10.** Hot runner device according to one of the preceding claims, **characterized in that** the moving means comprises a lifting plate (5) movable by a drive device.

**11.** Hot runner device according to one of the preceding claims, **characterized in that** one or both of the frictional and/or self-locking connections is realized such that the shut-off needle (3) or the abutment of the shut-off needle is connected to the moving means in a frictionally engaged and self-locking manner such that the shut-off needle (3) exceeds self-locking and automatically disengages at an axial force introduction which is greater than the static friction of the frictional connection.

**12.** Hot runner device according to one of the preceding claims, **characterized in that** before reaching the overload, no axial displacement of the shut-off needle (3) takes place, since the frictional engagement does not allow elastic deformation during release.

**13.** Hot runner device according to one of the claims 3 to 12, **characterized in that** the cross-press assembly is formed as a shrink, stretch and/or stretch-shrink assembly.

**14.** Hot runner device according to claim 13, **characterized in that** the shrink connection is formed as a cylindrical shrink connection.

**15.** Hot runner device according to one of the claims 2 to 14, **characterized in that** the limit force is lower than an expended mounting force.

**16.** Hot runner device according to claim 15, **characterized in that** the level of the limit force is dependent on the level of the mounting force, and the adjustment of the limit force takes place via the mounting force.

**Revendications**

**1.** Dispositif à canaux chauds, qui présente au moins une buse à obturation par aiguille (1) et une aiguille d'obturation (3) déplaçable dans la buse à obturation par aiguille (1) par un moyen de déplacement, ainsi qu'un système de protection contre la surcharge pour l'aiguille d'obturation (3), **caractérisé en ce que** le système de protection contre la surcharge est réalisé comme suit : l'aiguille d'obturation est reliée au moyen de déplacement dans au moins une première direction de déplacement directement ou indirectement par au moins une liaison par friction (21) qui est libérable lorsqu'une force limite est dépassée.

**2.** Dispositif à canaux chauds selon la revendication 1, **caractérisé en ce que** la liaison par friction (21a) est réalisée sous la forme d'une liaison autobloquante.

**3.** Dispositif à canaux chauds selon la revendication 1, **caractérisé en ce que** la liaison par friction (21b) est réalisée sous la forme d'un assemblage transversal à ajustement serré.

**4.** Dispositif à canaux chauds selon l'une des revendications précédentes, **caractérisé en ce que** le système de protection contre la surcharge repose exclusivement sur un principe à friction.

**5.** Dispositif à canaux chauds selon l'une des revendications précédentes, **caractérisé en ce que** le système de protection contre la surcharge est réalisé comme suit : l'aiguille d'obturation est reliée au moyen de déplacement dans deux directions de déplacement différentes (X ; -X), dans chaque cas directement ou indirectement par au moins deux liaisons par friction (21) qui sont libérables dans chaque cas lorsqu'une force limite est dépassée.

**6.** Dispositif à canaux chauds selon l'une des revendications précédentes, **caractérisé en ce que** l'une ou les deux liaisons par friction (21a, 21b) est/sont réalisée(s) par une liaison conique à ajustement serré autobloquante libérable.

**7.** Dispositif à canaux chauds selon l'une des revendications précédentes, **caractérisé en ce que** la première liaison conique à ajustement serré libérable est réalisée par un cône extérieur sur l'aiguille d'obturation (3) ou sur le contre-palier de l'aiguille d'obturation (3), en particulier une tige (23), comme premier partenaire de friction et un cône intérieur dans un alésage du moyen de déplacement ou dans un composant inséré dans le moyen de déplacement, en particulier une douille (24), comme deuxième partenaire de friction.

**8.** Dispositif à canaux chauds selon l'une des revendications précédentes, **caractérisé en ce que** la deuxième liaison conique à ajustement serré libérable est réalisée par un cône extérieur (A) sur une douille (31), à travers laquelle passe l'aiguille d'obturation (3), comme premier partenaire de friction et un cône intérieur (I) dans le moyen de déplacement ou dans une autre douille (30) insérée dans le moyen de déplacement comme deuxième partenaire de friction.

**9.** Dispositif à canaux chauds selon l'une des revendications précédentes, **caractérisé en ce que** l'aiguille d'obturation (3) est déplaçable linéairement en va-et-vient dans une direction (X) par le moyen de déplacement, en particulier est déplaçable exclusivement linéairement, et que l'aiguille d'obturation est reliée au moyen de déplacement exclusivement par friction dans et/ou à l'encontre de la direction (X).

**10.** Dispositif à canaux chauds selon l'une des revendications précédentes, **caractérisé en ce que** le moyen de déplacement présente une plaque de levage (5) déplaçable par un dispositif d'entraînement.

**11.** Dispositif à canaux chauds selon l'une des revendications précédentes, **caractérisé en ce que** l'une ou les deux liaisons par friction et/ou autobloquantes sont réalisées de telle sorte que l'aiguille d'obturation (3) ou le contre-palier de l'aiguille d'obturation est relié(e) au moyen de déplacement par friction et de manière autobloquante de telle sorte que l'aiguille d'obturation (3) dépasse l'autoblocage et se libère automatiquement en cas d'application d'une force axiale qui est supérieure à la friction statique de la liaison par friction.

**12.** Dispositif à canaux chauds selon l'une des revendications précédentes, **caractérisé en ce que**, avant d'atteindre la surcharge, aucun déplacement axial de l'aiguille d'obturation (3) n'a lieu, car la liaison par friction ne permet aucune déformation élastique lors du déclenchement.

**13.** Dispositif à canaux chauds selon l'une des revendications 3 à 12, **caractérisé en ce que** l'assemblage transversal à ajustement serré est réalisé sous la forme d'un assemblage par contraction, dilatation et/ou dilatation-contraction.

**14.** Dispositif à canaux chauds selon la revendication 13, **caractérisé en ce que** la liaison par contraction est réalisée sous la forme d'une liaison par contraction cylindrique.

**15.** Dispositif à canaux chauds selon l'une des revendications 2 à 14, **caractérisé en ce que** la force limite est inférieure à une force de montage exercée.

**16.** Dispositif à canaux chauds selon la revendication 15, **caractérisé en ce que** le niveau de la force limite dépend du niveau de la force de montage et que le réglage de la force limite est effectué par la force de montage.

Fig. 1

Fig. 2

Fig. 3

Fig. 4

a)    b)    c)

Fig. 5

EP 3 585 588 B1

16

Fig. 6

Fig. 7

EP 3 585 588 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2011086121 A1
- DE 102013006257 A1
- US 2010044896 A1
- DE 102015216059 A1